# EUROPÄISCHE PATENTSCHRIFT

(11) **EP 2 127 971 B1**
(45) Veröffentlichungstag und Bekanntmachung des Hinweises auf die Patenterteilung: **23.02.2011**
(21) Anmeldenummer: 09160922.2
(22) Anmeldetag: 22.05.2009
(51) Int. Cl.: B60S 11/00, B66C 1/20

(54) **Felge mit einem Anschlagelement**
Rim with a mounting element
Jante dotée d'un élément d'attacher

(30) Priorität: 26.05.2008 DE 102008025161
(43) Veröffentlichungstag der Anmeldung: 02.12.2009
(73) Patentinhaber: Komatsu Hanomag GmbH, 30449 Hannover (DE)
(72) Erfinder: Bloch, Heiko, 31832 Springe (DE); Brockhausen, Jens, 30890, Barsinghausen (DE)
(74) Vertreter: Rehberg Hüppe + Partner

(56) Entgegenhaltungen:
- WO-A1-2007/015381
- DE-C- 917 239
- DE-U1-202004 003 314
- GB-A- 2 008 066
- GB-A- 2 414 009
- US-A- 1 658 451
- US-A- 3 061 354

## Beschreibung

### TECHNISCHES GEBIET DER ERFINDUNG

Die vorliegende Erfindung betrifft eine Felge mit einem Anschlagelement, welches zum Anschlagen eines Anschlagmittels wie eines Seiles oder einer Kette dient und über welches ein der Felge zugeordnetes Fahrzeug angehoben werden kann. Weiterhin betrifft die Erfindung ein mit mindestens einer derartigen Felge ausgestattetes Fahrzeug.

### STAND DER TECHNIK

Beispielhaft wird im Folgenden auf ein Arbeitsfahrzeug wie einen Radlader, einen Bagger und ähnliches eingegangen, obwohl die Erfindung beliebige Fahrzeuge, beispielsweise ein Kraftfahrzeug, Nutzfahrzeug, Landmaschinenfahrzeug, Baustellenfahrzeug und ähnliches, betreffen kann.

Da Arbeitsfahrzeuge infolge Ihrer begrenzten Endgeschwindigkeit und Straßentauglichkeit üblicherweise über ein Transportfahrzeug zwischen unterschiedlichen Standorten oder Arbeitsstellen transportiert werden, ist ein Verladen des Arbeitsfahrzeuges erforderlich. Für ein derartiges Verladen des Arbeitsfahrzeuges bedarf es eines Anhebens des Arbeitsfahrzeuges. Darüber hinaus kann ein entsprechendes Anheben des Arbeitsfahrzeuges erforderlich sein für eine Positionierung oder Ausrichtung des Arbeitsfahrzeuges in beengten Verhältnissen oder bei einem "Festfahren" des Arbeitsfahrzeuges.

Ein Anheben des Arbeitsfahrzeuges erfolgt üblicherweise über eine Hebevorrichtung wie einen Kran oder eine anderweitige Lifteinrichtung, die beispielsweise ortsfest ausgebildet sein können oder einem Fahrzeug, insbesondere dem Transportfahrzeug, zugeordnet sind. Üblicherweise finden hierzu Anschlagmittel wie ein Seil oder eine Kette Einsatz, die die Kräfte zwischen dem Arbeitsfahrzeug und der Hebevorrichtung übertragen. Zur Befestigung des Anschlagmittels an dem Arbeitsfahrzeug werden üblicherweise Längs- oder Querträger des Arbeitsfahrzeuges genutzt.

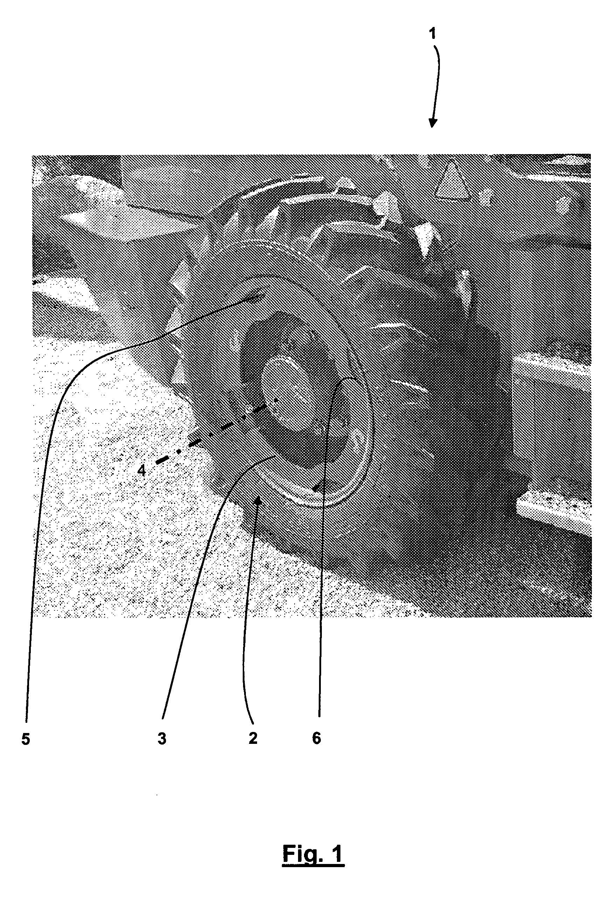

Fig. 1 zeigt ein auf der Messe "BAUMA" am 27.04.2007 ausgestelltes Fahrzeug, bei welchem die Felge eines Fahrzeugrades radial außen liegend drei ösenförmige Anschlagelemente besitzt. Unklar ist, ob diese einer Handhabung des Fahrzeugrades in demontiertem Zustand dienen oder einem Anschlagen eines Anschlagmittels zum Anheben des Arbeitsfahrzeuges mit einer Hebevorrichtung.

DE 20 2004 003 314 U1 offenbar ein starres Anschlagelement, bei dem eine Öse für ein Hubseil mit einem Rohrabschnitt verschweißt ist. Das der Öse gegenüberliegende offene Ende des Rohrabschnittes wird auf einen Achsstummel eines Fahrzeugs mit geringfügig kleinerem Außendurchmesser aufgeschoben. Bei einem Anheben des Fahrzeugs über ein durch die Öse durchgeführtes Seil mit einem Kran verkantet der Rohrabschnitt gegenüber dem Achsstummel, womit eine feste Verbindung zwischen Anschlagelement und Achsstummel herbeigeführt werden soll. Zusätzlich können über das offene Ende des Rohres hervorstehende flügel- oder rippenartige Stützplatten vorgesehen sein, die einerseits Distanzstücke bilden und andererseits die Biegefestigkeit des Rohrabschnitts durch Versteifung der Mantelfläche erhöhen können. Da die Sicherungswirkung für die Verbindung zwischen Anschlagelement und Achsstummel auf dem Verkanten beruht mit hiermit einhergehender reibschlüssiger Verbindung zwischen der Innenfläche des Rohrabschnitts und der Mantelfläche des Achsstummels ist eine Verdrehung zwischen Anschlagelement und Achsstummel bzw. Felge mit zunehmendem Anheben nicht möglich. Andererseits bedeutet das erforderliche Verkanten des Anschlagelements gegenüber dem Achsstummel eine unerwünschte, zusätzliche Beanspruchung von Achsstummel, Achse und Felge. Schließlich birgt die auf einem Reibschluss basierende Verbindung zwischen Anschlagelement und Achsstummel ein Sicherheitsrisiko in sich.

Die gattungsgemäße GB 2 414 009 A offenbart ein starres Anschlagelement ohne Dreh-Freiheitsgrad, wobei dieses in erster Näherung tellerartig geformt ist. Die Bodenfläche des Tellers besitzt vier gleichmäßig in Umfangsrichtung verteilte Bohrungen, über die das Anschlagelement über vier Bolzen oder die Radbolzen mit der Felge starr verbunden werden kann. Weiterhin besitzt das Anschlagelement vier über den Umfang verteilte Ausnehmungen, in die ein Haken eines Zugmittels zum Anheben eingeklinkt werden kann. Die starre Befestigung des Anschlagelements über vier Bolzen stellt unter Umständen eine ungünstige Kraftübertragung zwischen Anschlagelement und Felge dar. Weiterhin geben die vier Bohrungen des Anschlagelements bei Ausrichtung zu entsprechenden Durchgangsbohrungen oder Gewindebohrungen der Felge bei stehendem Fahrzeug, also vorgegebener Orientierung der Durchgangsbohrungen oder Gewindebohrungen, die Ausrichtung der vier Ausnehmungen für das Einklinken des Hakens des Zugmittels vor, die abweichen können von einer tatsächlich gewünschten Ausrichtung. Schließlich erfordert die Herstellung der Verbindung zwischen Anschlagelement und Felge über vier Bolzen einen erhöhten Montage- und Demontageaufwand.

### AUFGABE DER ERFINDUNG

Der vorliegenden Erfindung liegt die Aufgabe zugrunde,
- eine Felge mit einem Anschlagelement und
- ein Fahrzeug mit einer Felge
   vorzuschlagen, wobei
- dem Kraftfluss von einem Anschlagmittel über ein Anschlagelement zu der Felge und dem Fahrzeug beim Anheben und Absenken des Fahrzeuges,
- dem Montageaufwand zum Anschlagen eines Anschlagmittels an das Anschlagelement und
- dem Aufwand für ein mehrfaches Anheben, Absenken und Bewegen des Fahrzeuges mit dem Antrieb des Fahrzeuges
besondere Aufmerksamkeit gewidmet werden soll.

### LÖSUNG

Die Aufgabe der Erfindung wird erfindungsgemäß mit einer Felge mit den Merkmalen des unabhängigen Patentanspruchs 1 gelöst. Weitere Ausgestaltungen einer erfindungsgemäßen Felge ergeben sich entsprechend den abhängigen Patentansprüchen 2 bis 8. Weiterhin wird die

Aufgabe der Erfindung gelöst durch ein Fahrzeug mit den Merkmalen des unabhängigen Patentanspruchs 9.

### BESCHREIBUNG DER ERFINDUNG

Die vorliegende Erfindung geht zunächst von der Überlegung aus, dass für die aus Fig. 1 bekannte Ausführungsform des Standes der Technik das Anschlagmittel zunächst mit der Auswahl eines der beiden Anschlagelemente der Felge beginnt, was für die Bedienperson einen zusätzlichen Auswahlschritt darstellt, welcher erfindungsgemäß eingespart werden kann.

Darüber hinaus sind gemäß Fig. 1 die Anschlagelemente radial beabstandet von der Rotationsachse der Felge an dieser befestigt, so dass auf die Felge beim Anheben des Fahrzeuges Kräfte und Biegemomente wirken, die zu erhöhten Belastungen der Achse und insbesondere der Felge selbst führen, die schlimmstenfalls zu plastischen Verformungen der Felge führen können. Beispielsweise können erfindungsgemäß Abstützungen von Kräften über ein Felgenhorn vermieden werden.

Schließlich würde das Anschlagen eines Anschlagmittels an eines der Anschlagelemente in der Stellung der Felge gemäß Fig. 1 dazu führen, dass mit dem Anheben des Fahrzeuges ein Torsionsmoment um die Rotationsachse der Felge erzeugt wird, welches die Felge und das Rad verdrehen möchte.
a) Ist das Rad abgebremst, wirkt mit dem Anheben des Fahrzeuges das genannte Torsionsmoment auf die Bremseinrichtung. Bei ruckartigen Bewegungen des Fahrzeuges beim Anheben kann eine stoßartige Beanspruchung der Bremseinrichtung auftreten, was zu Beschädigungen beispielsweise des Bremsbelages führen kann.
b) Ist hingegen das Fahrzeugrad ungebremst, wird mit dem Anheben des Fahrzeuges das Fahrzeugrad verdreht, was dazu führt, dass sich das Fahrzeug quer zur Hubrichtung bewegt. Dies stellt einen unerwünschten dynamischen Vorgang während des Anhebens dar, was sich beispielsweise auch äußern kann in einer schwingenden Bewegung des Fahrzeuges nach dem Lösen des Kontaktes des Fahrzeugrades mit dem Boden.

Ein weiterer Nachteil der aus dem Stand der Technik bekannten Ausführungsform ist, dass sich unterschiedliche Kraftverhältnisse an dem Fahrzeug ergeben je nach Stellung des Fahrzeugrades beim Abstellen und Anschlagen des Anschlagmittels.

Erfindungsgemäß wird vorgeschlagen, dass das Anschlagelement fluchtend zur Rotationsachse der Felge befestigt ist. Hierbei kann beispielsweise das Anschlagelement unmittelbar oder mittelbar an einem Felgenkörper der Felge befestigt sein. Erfindungsgemäß ist das Anschlagelement mit einer Durchgangsbohrung oder Gewindebohrung verschraubt, die fluchtend zur Rotationsachse der Felge orientiert ist.

Die erfindungsgemäße Ausgestaltung kann zu den folgenden Vorteilen führen:
a) Durch das mittige "Angreifen" des Anschlagelementes an der Felge werden die zuvor erläuterten Beanspruchungen, insbesondere Kräfte und Biegemomente, der Felge vermieden bzw. minimiert.
b) Weiterhin wird unabhängig von der Stellung des Fahrzeugrades beim Anheben des Fahrzeuges kein Torsionsmoment erzeugt, dessen Größe abhängig ist von der Stellung des Fahrzeugrades beim Abstellen des Fahrzeuges. Hierdurch kann die erläuterte Bewegung des Fahrzeuges quer zur Hubrichtung und/oder eine zusätzliche Belastung einer Bremseinrichtung vermieden werden.

Für eine Befestigung des Anschlagelementes an der Felge gibt es vielfältige Möglichkeiten, wobei diese Befestigung unmittelbar oder mittelbar unter Zwischenschaltung von zusätzlichen Bauelementen der Felge erfolgen kann.

Das Anschlagelement kann beispielsweise einen Bolzen aufweisen, welcher durch eine Bohrung der Felge oder eines Zusatzkörpers durchgesteckt wird und rückseitig von Felge oder Zusatzkörper durch eine aufschraubbare Mutter sicherbar ist. Für einen weiteren Vorschlag der Erfindung ist das Anschlagelement in eine Gewindebohrung der Felge eingeschraubt, wobei diese Gewindebohrung fluchtend zur Rotationsachse der Felge orientiert ist. Eine derartige Gewindeverbindung stellt eine zuverlässige Verbindung dar, die mit in üblichen Werkstätten vorhandenen Werkzeugen betätigt werden kann und auch wieder gelöst werden kann.

In weiterer Ausgestaltung der Erfindung ist das Anschlagelement mit einem Tragkörper, beispielsweise einem Zapfen, gebildet. Ein Endbereich des Tragkörpers besitzt in diesem Fall ein Außengewinde, über welches der Tragkörper in die Gewindebohrung der Felge einschraubbar ist.

Möglich ist durchaus, dass das Anschlagelement als ein starres Bauelement ausgebildet ist, bei dem beispielsweise der Tragkörper starr mit einer Öse, einem Haken oder ähnlichem verbunden ist. Hierbei kann eine Öse oder Lasche auch über eine "Karabinerverbindung" verfügen, in welche eine Schlaufe oder Öse des Anschlagmittels eingeklipst werden kann. Für einen weiteren Vorschlag der Erfindung ist allerdings der Tragkörper mit einem Anschlagkörper drehbar gekoppelt unter einer Gewährleistung einer Rotation des Anschlagkörpers um die Rotationsachse der Felge. Die Vorgabe eines derartigen Freiheitsgrades ermöglicht, dass über einen Benutzer der Anschlagkörper unabhängig von dem Drehwinkel des Fahrzeugrades mit dem Anschlagen des Anschlagmittels immer in dieselbe Ausrichtung gebracht werden kann, die optimal ist für das Anschlagen des Anschlagmittels und das Anheben des Fahrzeuges. Ebenfalls möglich ist, dass eine derartige Verdrehung um den Freiheitsgrad nicht gezielt durch den Benutzer erfolgt, sondern dass eine Ausrichtung des Anschlagkörpers mit einer Verdrehung um den Freiheitsgrad automatisch erfolgt durch die von dem Anschlagmittel aufgebrachten Hubkräfte, so dass sich der Anschlagkörper in Wirkrichtung des Anschlagmittels ausrichtet. Dies hat zur Folge, dass auf den Anschlagkörper ohne unnötige Hebelarme nahezu ausschließlich die Kräfte des Anschlagmittels wirken, ohne dass um die durch den Freiheitsgrad vorgegebene Achse wirkende Momente erzeugt werden. Dies führt zu einer Verringerung der Beanspruchung des Anschlagelements und letztendlich der Felge.

Für einen weiteren erfindungsgemäßen Vorschlag kann ein Freiheitsgrad vorgesehen sein um eine Schwenkachse, die quer zur Rotationsachse der Felge orientiert ist. Ein Aufnahmeelement, beispielsweise eine Öse des Anschlagelementes, ist schwenkbar um diese Schwenkachse gegenüber weiteren Bauelementen des Anschlagelements gelagert. Durch diese Ausgestaltung kann eine Ausrichtung des Aufnahmeelementes in Wirkrichtung des Anschlagmittels gewährleistet werden, auch wenn das Anschlagmittel nicht genau vertikal zum Anschlagelement orientiert ist, sondern die Wirkrichtung des Anschlagmittels quer zur Fahrzeuglängsachse geneigt ist.

Entsprechend einem weiteren Vorschlag der Erfindung besitzt die Felge eine Fixiereinrichtung, über welche der Freiheitsgrad der Verdrehung des Anschlagkörpers um die Rotationsachse der Felge und/oder der Freiheitsgrad der Verschwenkung des Aufnahmeelementes um die Schwenkachse beseitigbar oder einschränkbar ist. Eine derartige Einschränkung des Freiheitsgrades oder der Freiheitsgrade ist insbesondere in Situationen von Vorteil, wenn das Anschlagmittel keine Hubkräfte auf das Anschlagelement ausübt, also beispielsweise während des Transports des Fahrzeuges auf einem Transportfahrzeug oder während des Betriebs des Fahrzeuges ohne Anschlagmittel. Ohne die Fixiereinrichtung könnte das Anschlagelement infolge der Freiheitsgrade unerwünschte Bewegungen ausführen, die zu einer unerwünschten Lärmentwicklung, einem "Klappern" und zu Beschädigungen des Anschlagelementes und der Felge führen könnten. Bei einer derartigen Fixiereinrichtung handelt es sich beispielsweise um
- eine Schraubverbindung, mittels welcher ein bewegliches Bauelement des Anschlagelementes mit einem weiteren Bauelement des Anschlagelementes oder der Felge verschraubt wird,
- eine Spanneinrichtung zum Verspannen der Schwenkachse oder der Rotationsachse des Anschlagkörpers gegenüber der Felge,
- eine Rast-, Sperr- oder Klipseinrichtung,
- einen Draht, einen Bindfaden, einen Spanngurt, eine Klammer oder ähnliches, mittels welchen ein Bauelement des Anschlagelementes wie das Aufnahmeelement gegenüber benachbarten Bauelementen fixiert werden kann.

Während durchaus möglich ist, dass eine Befestigung des Anschlagelementes unmittelbar an einem Felgenkörper der Felge erfolgt, ist ein weiterer Vorschlag der Erfindung darauf ausgerichtet, dass an dem Felgenkörper ein Zusatzkörper befestigt ist, an welchem das Anschlagelement befestigbar ist. Beispielsweise handelt es sich bei dem Zusatzkörper um einen Schweißkörper, welcher mit dem Felgenkörper verschweißt ist. Hierbei kann der Schweißkörper kreisringförmig ausgebildet sein und radial außen liegend mit dem Felgenbett, der Felgenschulter oder dem Felgenhorn verschweiß sein. Hierdurch kann einerseits ermöglicht werden, dass die Erfindung Einsatz finden kann in Verbindung mit üblicherweise bekannten und in großen Stückzahlen vertriebenen Felgen, indem an einer derartigen Felge der Zusatzkörper zwecks Anpassung an die Erfindung befestigt wird. Andererseits ist es möglich, die geeigneten Befestigungselemente für die Befestigung des Anschlagelementes in separater Fertigung an dem Zusatzkörper vorzusehen. Beispielsweise kann in separater Fertigung das Gewinde in den Zusatzkörper eingeschnitten werden. Ein weiteres Problem kann sich ergeben, wenn in Richtung der Rotationsachse der Felge die Befestigungsstellen der Felge an der Achse, insbesondere der Kümpel und die Radschüssel, nach innen zurückversetzt sind. In diesem Fall müsste das Anschlagmittel schräg aus der Felge herausgeführt werden, was zum Anlegen des Anschlagelementes an das Felgenhorn und den Reifen führen kann, womit Beschädigungen der Felge und des Reifens verbunden sein können. Um dieses zu vermeiden, könnte das Anschlagelement in Richtung der Rotationsachse eine Erstreckung aufweisen, so dass das Anschlagmittel außen liegend von der Felge mit dem Anschlagelement in Wirkverbindung tritt. Hier ist durch den Einsatz des zuvor genannten Zusatzkörpers eine weitere Möglichkeit geschaffen, da der Zusatzkörper gegenüber der Radschüssel nach außen versetzt an dem Felgenkörper angeordnet werden kann.

Für einen weiteren Vorschlag der Erfindung besitzt der Zusatzkörper Durchbrechungen, die geeignet ausgebildet und angeordnet sind, so dass durch diese Schrauben zugänglich sind, die einer Befestigung der Felge an einem Fahrzeug dienen.

Eine weitere Lösung der der Erfindung zugrundeliegenden Aufgabe ist gegeben für ein Fahrzeug, bei welchem mindestens eine Felge der zuvor erläuterten Art, also eine Felge mit einem Anschlagelement, vorgesehen ist. Hierbei ist es durchaus möglich, dass ein Anschlagmittel auch an anderen Bauelementen des Fahrzeuges angeschlagen ist, beispielsweise an einem Fahrzeugrahmen oder an einem Längs- oder Querträger, sofern zumindest eine Verbindung des Anschlagmittels mit einer Felge erfolgt. Ebenfalls denkbar ist, dass lediglich an Felgen einer Achse, beispielsweise der Hinterachse, ein Anschlagen des Anschlagmittels erfolgt, während im anderen Bereich des Fahrzeuges eine Anlenkung an einem Fahrzeugrahmen, beispielsweise einem vorderen Querträger, erfolgt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein Foto eines bekannten Arbeitsfahrzeuges gemäß dem Stand der Technik mit am äußeren Felgenrand angeordneten, sich diametral gegenüberliegenden Anschlagelementen.
- **Fig. 2**: zeigt eine räumliche Darstellung einer erfindungsgemäßen Felge mit Anschlag- element.
- **Fig. 3**: zeigt einen Schnitt entlang einer Rotationsachse durch ein im Rahmen der Erfindung einsetzbares Anschlagelement.
- **Fig. 4**: zeigt einen Felgenkörper mit hierin eingeschweißtem Zusatz- oder Schweißkörper, an welchem das Anschlagelement befestigbar ist, in einem Halblängsschnitt.
- **Fig. 5**: zeigt die Felge mit Schweißkörper gemäß Fig. 4 in einer Vorderansicht.
- **Fig. 6**: zeigt eine räumliche Darstellung eines erfindungsgemäßen Fahrzeuges mit Anschlagmitteln und Hubvorrichtung.
- **Fig. 7**: zeigt eine Darstellung eines erfindungsgemäßen Fahrzeuges mit Anschlagmitteln und Hubvorrichtung gemäß Fig. 6 von hinten.
- **Fig. 8**: zeigt eine Darstellung eines erfindungsgemäßen Fahrzeuges mit Anschlagmitteln und Hubvorrichtung gemäß Fig. 6 und 7 räumlich von oben.

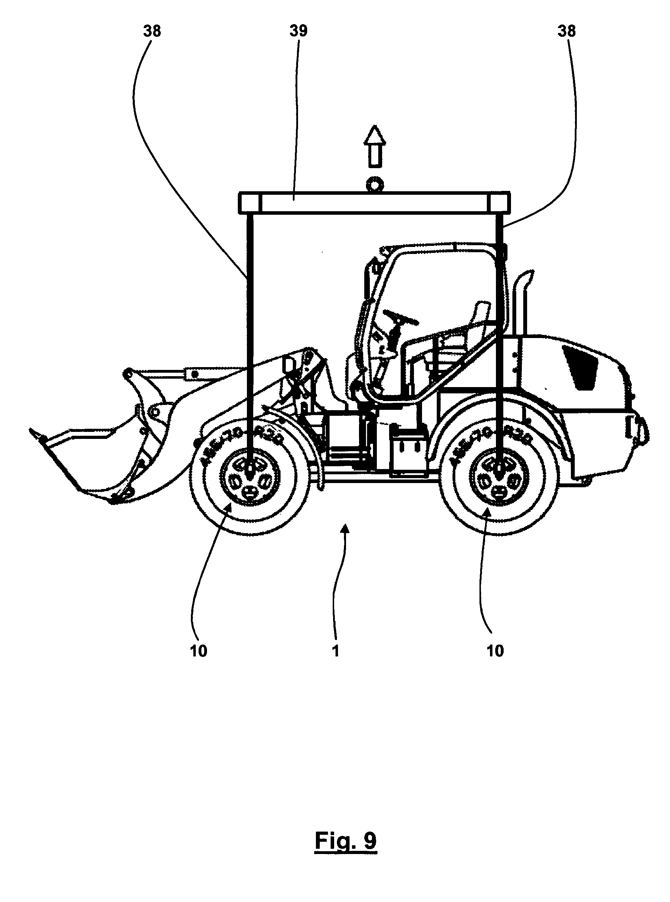

- **Fig. 9**: zeigt eine Darstellung eines erfindungsgemäßen Fahrzeuges mit Anschlagmitteln und Hubvorrichtung gemäß Fig. 6 bis 8 von der Seite.

### FIGURENBESCHREIBUNG

**Fig. 1** zeigt ein Fahrzeug 1, hier ein Arbeitsfahrzeug, wie dieses am 27.04.2007 auf der Messe "BAUMA" in München ausgestellt worden ist. Das Fahrzeug 1 besitzt ein Fahrzeugrad 2 mit einer Felge 3. Fahrzeugrad 2 und Felge 3 rotieren bei einer Bewegung des Fahrzeuges auf dem Boden um eine Rotationsachse 4-4. Auf der dem Fahrzeug 1 abgewandten Seite trägt die Felge 3 an sich zu der Rotationsachse 4-4 diametral gegenüberliegenden Positionen Anschlagelemente 5, 6, die hier als Ösen ausgebildet sind.

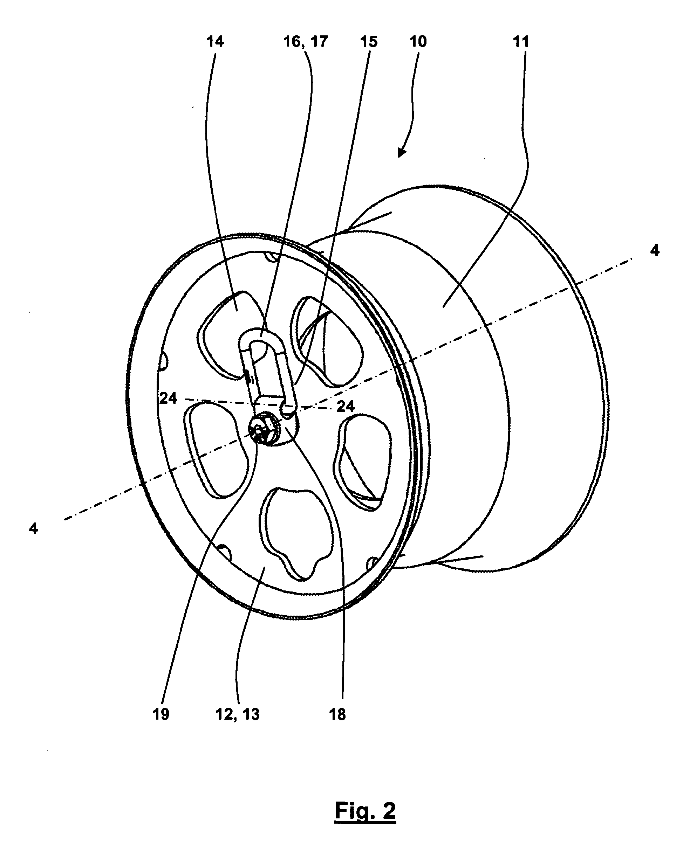

**Fig. 2** zeigt eine erfindungsgemäße Felge 10, die mit einem Felgenkörper 11 gebildet ist. Bei dem Felgenkörper 11 kann es sich um eine übliche, in hohen Stückzahlen vertriebene Felge handeln, die an sich nicht für die Befestigung des im Folgenden beschriebenen Anschlagelementes geeignet ist. Ein derartiger Felgenkörper 11 verfügt beispielsweise über Bestandteile wie Felgenhörner, Felgenschultern, Hump, Tiefbett, Schüssellappen, Belüftungslöcher, Kümpel, Radschüssel, Mittenloch und ähnliches. Das Felgensystem des Felgenkörpers 11 kann beliebig sein, beispielsweise kann es sich um eine PKW-Tiefbettfelge, eine LKW-Steilschulterfelge (schlauchlos) oder eine LKW-Schrägschulterfelge handeln. Das Material des Felgenkörpers 11 kann ebenfalls beliebig sein, beispielsweise Stahl, Aluminium bei Fertigung durch einen Schmiedevorgang, einen Walzvorgang, Gießen und ähnlichem, wobei eine Einschränkung auf die zuvor genannten beispielhaften Ausführungsformen nicht erfolgen soll und dem Fachmann beliebige andere Ausgestaltungsformen von Felgenkörpern bekannt sind, die von der Erfindung umfasst sein sollen.

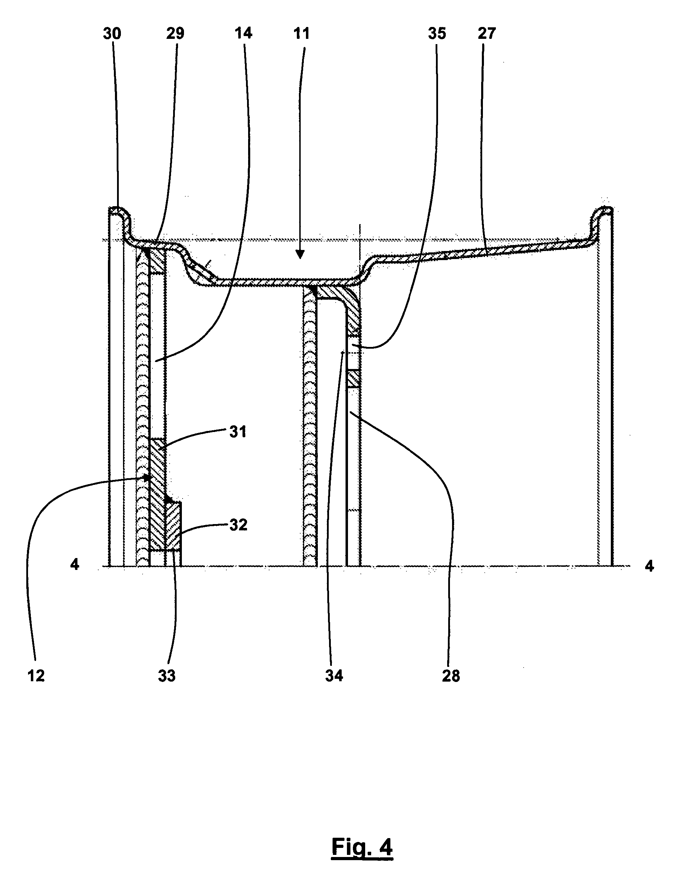

Zur Vereinfachung der folgenden Beschreibung wird die Felge im Halblängsschnitt gemäß Fig. 4 grob vereinfacht als "T-förmig" bezeichnet, wobei Felgenhorn, Felgenschulter und Bett der Felge dem horizontalen Schenkel des T zugeordnet sind, während der vertikale Schenkel des T mit der Radschüssel, dem Kümpel, dem Belüftungsloch gebildet ist und der Übergang von den beiden genannten Schenkeln über den Schüssellappen erfolgt.

An dem Felgenkörper 11 ist ein Zusatzkörper 12 befestigt, welcher für das dargestellte Ausführungsbeispiel als Schweißkörper 13 ausgebildet ist. Der Zusatzkörper 12 ist für das dargestellte Ausführungsbeispiel gemäß Fig. 2 als Kreisscheibe oder Kreisringscheibe ausgebildet, wobei die Kreisringscheibe parallel zum vertikalen Schenkel des T des Felgenkörpers 11 und im außen liegenden Endbereich des horizontalen Schenkel des T, also ungefähr im Bereich eines Horns des Felgenkörpers 11, angeordnet ist. Der Zusatzkörper 12 ist an dem Felgenkörper 11 befestigt, was für das dargestellte Ausführungsbeispiel erfolgt durch Verschweißen des Zusatzkörpers 12 mit dem horizontalen Schenkel des T des Felgenkörpers 11. Der kreisringförmige Zusatzkörper 12 besitzt Ausnehmungen oder Durchbrechungen 14, welche sich ungefähr in der Mitte der radialen Erstreckung des Zusatzkörpers 12 von der Rotationsachse 4-4 befinden und die gleichmäßig in Umfangsrichtung verteilt sind. Hierbei können, wie in Fig. 2 dargestellt, fünf Durchbrechungen vorgesehen sein, wobei auch mehr oder weniger Durchbrechungen vorgesehen sein können. Ebenfalls denkbar ist die Ausbildung des Zusatzkörpers 12 in einem abweichenden Design, beispielsweise mit Speichen, Armen oder ähnlichem, sofern gewährleistet ist, dass ein Befestigungsbereich des Zusatzkörpers 12 für ein Anschlagelement 15 starr an dem Felgenkörper 12 abgestützt ist.

In Fig. 2 ist weiterhin zu erkennen, dass das Anschlagelement 15 fluchtend zur Rotationsachse 4-4 der Felge 10 befestigt ist. Diese Formulierung soll die dargestellte Ausführungsform umfassen, für die das Anschlagelement 15 ein Aufnahmeelement 16, hier eine Öse 17, besitzt, welches abseits der Rotationsachse 4-4 der Felge 10 angeordnet ist.

Das Anschlagelement 15 ist weiterhin mit einem Anschlagkörper 18 gebildet sowie mit einem Tragkörper 19, über welchen die Verbindung zwischen Anschlagelement 15 und Zusatzkörper 12 erfolgt. Für das dargestellte Ausführungsbeispiel besitzt der Tragkörper 19 einen zapfenförmigen Endbereich, welcher über eine koaxial zur Rotationsachse 4-4 orientierte Ausnehmung mit dem Zusatzkörper 12 fest verbunden ist.

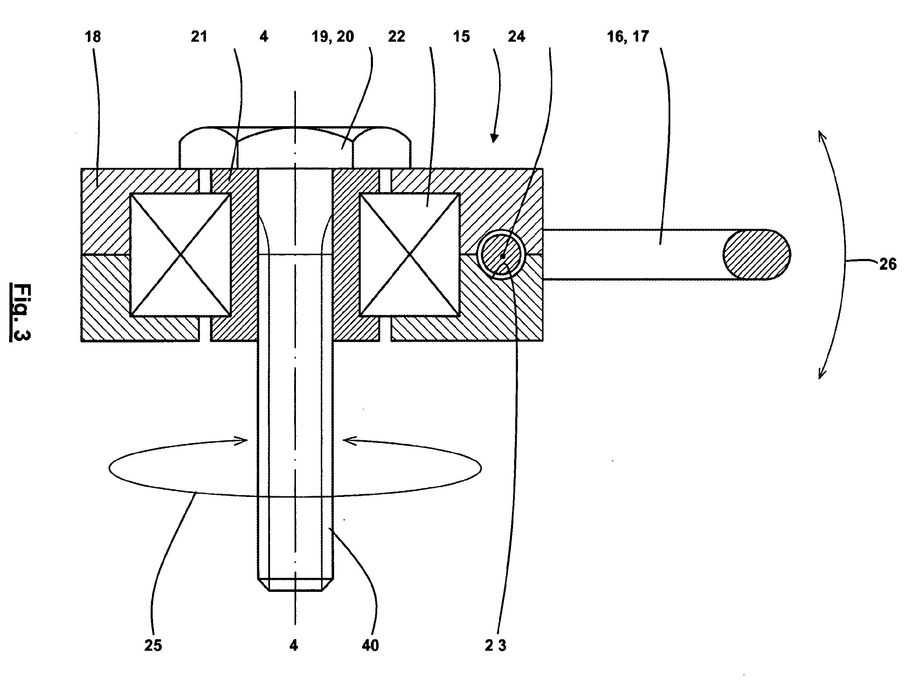

Eine mögliche Ausgestaltung eines Anschlagelementes 15 zeigt **Fig. 3**: Der Tragkörper 19 ist in diesem Fall als Schraube 20 ausgebildet, deren mit einem Außengewinde 40 ausgestatteter Endbereich in eine von der Ausnehmung des Zusatzkörpers 12 gebildete Gewindebohrung des Zusatzkörpers 12 einschraubbar ist. Mit dem Einschrauben der Schraube 20 in den Zusatzkörper 12 wird zwischen dem Kopf der Schraube 20 und der außen liegenden Stirnseite des Zusatzkörpers 12 eine Lagerhülse 21 verspannt, welche von der Schraube 20 durchsetzt ist. Alternativ kann der Tragkörper 19 mit einem Zapfen oder Bolzen ausgebildet sein, der in diesem Fall durch eine Durchgangsbohrung 33 des Zusatzkörpers 12 hindurchgesteckt wird und auf der innenliegenden Seite des Zusatzkörpers durch ein auf ein endseitiges Gewinde des Tragköpers 12 aufgeschraubte Mutter gesichert wird. Über ein Lager 22, welches ein Gleit- oder Wälzlager beliebiger Ausgestaltung sein kann, stützt sich der Anschlagkörper 18 an der Lagerhülse 21 derart ab, dass der Anschlagkörper 18 lediglich einen Freiheitsgrad für eine Verdrehung um die Rotationsachse 4-4 besitzt. Für das dargestellte Ausführungsbeispiel ist aus Montagegründen der Anschlagkörper 18 in einer Ebene quer zur Rotationsachse 4-4 geteilt ausgebildet. Der Anschlagkörper 18 besitzt radial außen liegend zu dem Lager 22 eine Durchgangsbohrung, welche vertikal zu der Zeichenebene gemäß Fig. 3 sowie quer zur Rotationsachse 4-4 orientiert ist mit einem Abstand zu der Rotationsachse 4-4. Durch diese Bohrung 23 wird eine Schwenkachse 24 vorgegeben. Entlang der Schwenkachse erstreckt sich ein zylinderförmiger Teilbereich des Aufnahmeelementes 16 bzw. der Öse 17 unter Bildung eines Gleitsitzes, so dass das Aufnahmeelement 16 um die Schwenkachse 24 verschwenkbar ist. Das Anschlagelement 15 besitzt somit einen rotatorischen Freiheitsgrad 25 um die Rotationsachse 4-4 sowie einen Schwenk-Freiheitsgrad 26 um die Schwenkachse 24.

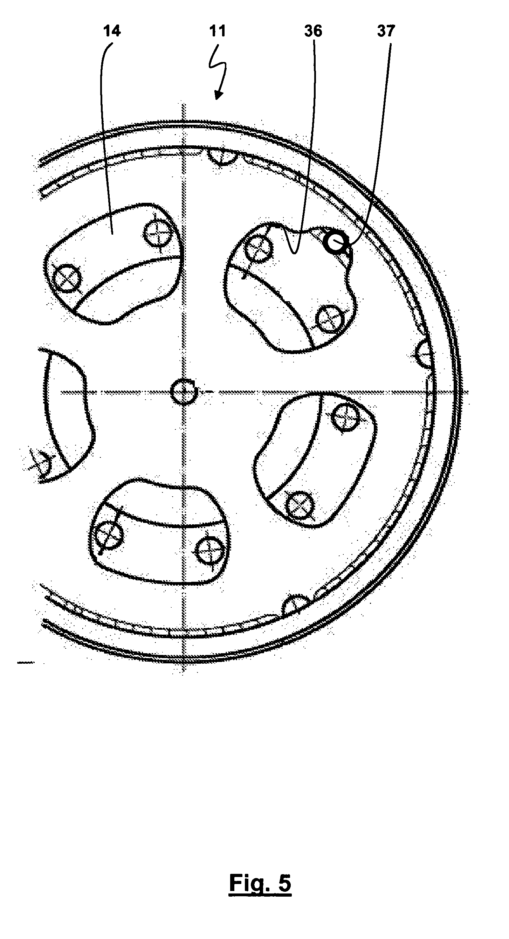

**Fig. 4** zeigt einen Halblängsschnitt eines Felgenkörpers 11, der in erster Näherung T-förmig ausgebildet ist mit einem horizontalen Schenkel 27 des T sowie einem vertikalen Schenkel 28 des T. Mit dem Schenkel 27, hier im Bereich eine Humps, einer Schrägschulter oder Felgenschulter 29, ist radial außen liegend der Zusatzkörper 12 verschweißt, so dass dieser lediglich geringfügig in axialer Richtung zu der Rotationsachse 4-4 gegenüber dem Felgenhorn 30 versetzt ist. Für das dargestellte Ausführungsbeispiel ist der Felgenkörper 11 mit einer ersten Kreisringscheibe 31 gebildet, welche die Durchbrechungen 14 bildet. Radial innen liegend, aber ebenfalls koaxial zur Rotationsachse 4-4, liegt an der Kreisringscheibe 31 eine weitere Kreisringscheibe 32 an, die an der Kreisringscheibe 31 befestigt ist, hier beispielsweise durch Verschweißen. Die Kreisringscheibe 32 besitzt einen gegenüber der Kreisringscheibe 31 deutlich verringerten Außendurchmesser und ist lediglich mittelbar über die Kreisringscheibe 31 an dem Felgenkörper 11 abgestützt. Die Kreisringscheiben 31, 32 besitzen eine Gewinde- oder Durchgangsbohrung 33, in welche die Schraube 20 eingeschraubt werden kann. Die Durchbrechungen 14 erstrecken sich koaxial zu den Längsachsen 34 der Befestigungsbohrungen 35, durch welche der Schenkel 28 des Felgenkörpers 11 mit dem Fahrzeug verschraubt werden kann. Somit sind die sich durch die Befestigungsbohrungen 35 erstreckenden Befestigungsschrauben von außen durch die Durchbrechungen 14 zugänglich, wie dies auch in **Fig. 5** zu erkennen ist. Weiterhin ist in Fig. 5 ersichtlich, dass eine der Durchbrechungen 36 eine Kontur besitzt, die abweichend zu den Konturen der anderen Durchbrechungen 14 ausgebildet ist. Die Durchbrechung 36 erstreckt sich radial weiter nach außen, so dass durch die Durchbrechung 36 auch ein Ventil 37 zugänglich ist.

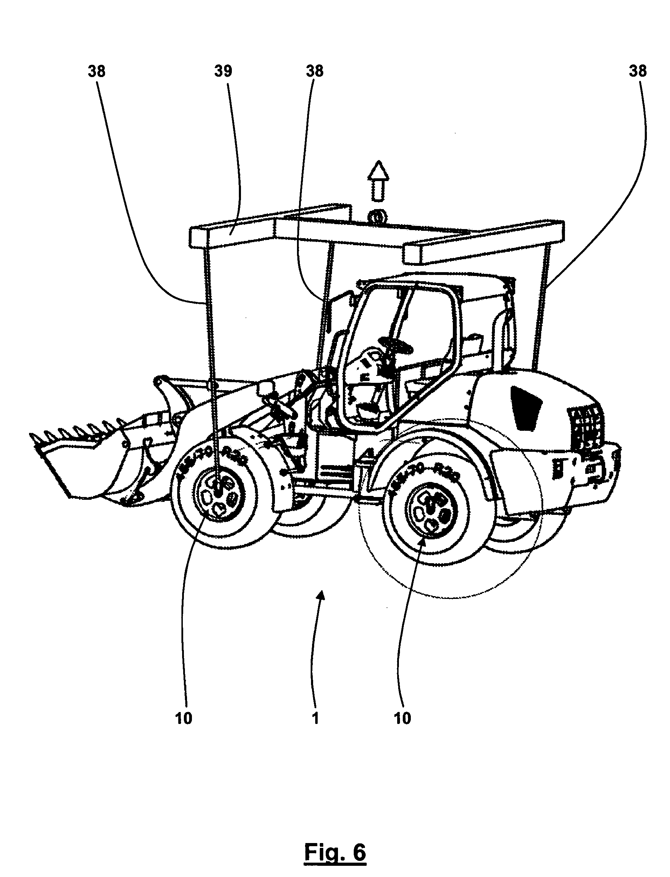

Die **Fig. 6 bis 8** zeigen in unterschiedlichen Ansichten das Anheben des Fahrzeuges 1 unter Einsatz mehrerer erfindungsgemäßer Felgen 10. An den Felgen 10 ist jeweils ein Endbereich eines Anschlagmittels 38, insbesondere eine Kette, ein Seil oder ein Drahtseil, angeschlagen. Hierzu können übliche Verbindungsmittel wie Karabiner, Ösen, zu verschraubende Befestigungselemente und ähnliches Einsatz finden. Der andere Endbereich der Anschlagmittel 38 ist an einem Hubrahmen 39 angelenkt, Der Hubrahmen 39 ist in erster Näherung H-förmig ausgebildet, wobei der Querschenkel des H parallel zur Längsachse des Fahrzeuges 1 orientiert ist mit einer Länge, welche ungefähr dem Achsabstand des Fahrzeuges 1 entspricht. Die Länge der beiden parallelen Schenkel des H entspricht im Wesentlichen der Spurbreite des Fahrzeuges oder ist größer als diese. Zur Vereinfachung der Darstellung sind in Fig. 6 lediglich drei Anschlagmittel 38 dargestellt.

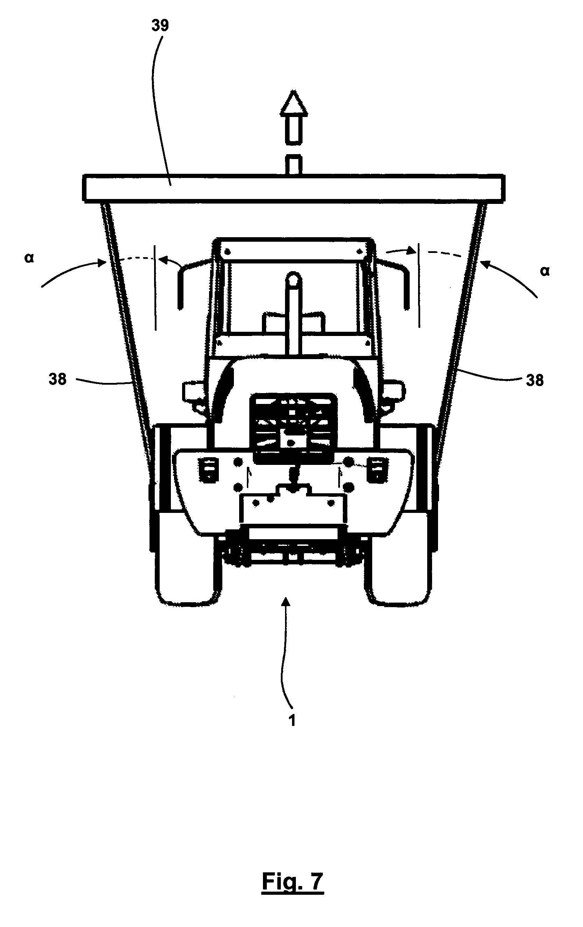

In der Rückansicht gemäß Fig. 7 ist zu erkennen, dass die Wirkrichtung der Anschlagmittel 38 gegenüber der Vertikalen um einen Winkel α geneigt sein kann. Infolge des Schwenk-Freiheitsgrades 26 kann das Aufnahmeelement 16 mit Aufbringung von Zugkräften durch die Anschlagmittel 38 aus der in Fig. 3 dargestellten Stellung um den Winkel α verschwenkt werden, so dass dieses automatisch zu der Wirkrichtung der Anschlagmittel 38 ausgerichtet wird. Eine entsprechende automatische Ausrichtung erfolgt, wenn sich der Hubrahmen 39 zu Beginn des Hubvorganges nicht mittig über dem Fahrzeug befindet.

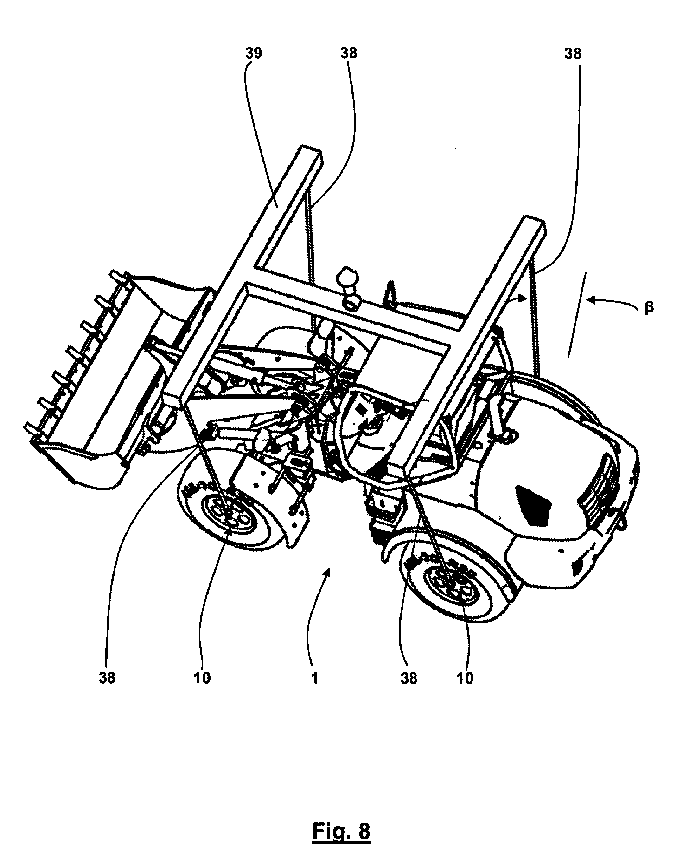

Weiterhin ist in Fig. 8 zu erkennen, dass unter Umständen der Achsabstand abweicht von der Länge des Querschenkels des H des Hubrahmens 39. In diesem Fall kann sich ein Winkel β der Anschlagmittel 38 gegenüber der Vertikalen ergeben in einer Fahrzeuglängsebene. Dann erfolgt bei Aufbringung von Zugkräften durch das Anschlagmittel 38 auf das Aufnahmeelement 16 eine automatische Verdrehung entsprechend dem rotatorischen Freiheitsgrad 25 um den Winkel β, so dass automatisch das Aufnahmeelement 16 mit der Wirkrichtung des Anschlagmittels 38 ausgerichtet wird.

Ein Anschlagelement, welches prinzipiell im Aufbau und bezüglich der Freiheitsgrade dem in Fig. 3 dargestellten Anschlagelement 15 entspricht, wird von dem Unternehmen Carlstahl vertrieben unter der Bezeichnung "5566.Lastbock Gewinde VLBG, Artikel-Gruppe 07031010". Selbstverständlich sind beliebige andere, an sich bekannte Anschlagelemente im Rahmen der Erfindung einsetzbar, wobei diese über gleiche, abweichende, mehr oder weniger bis keine Freiheitsgrade verfügen können. Auch für eine Befestigung des Anschlagelementes an dem Zusatzkörper oder unmittelbar an der Felge gibt es vielfältige Möglichkeiten. Beispielsweise kann ohne Verwendung eines Zusatzkörpers das Anschlagelement einen Flansch besitzen mit Flanschbohrungen, welche im Bohrbild und hinsichtlich der Durchmesser den Befestigungsbohrungen 35 entsprechen. Ein derartiger Flansch kann dann mit u. U. verlängerten Befestigungsschrauben gemeinsam mit dem Felgenkörper an dem Fahrzeug angeschraubt werden. Hierbei muss das Anschlagelement für diese abweichende, nicht dargestellte Ausführungsform eine ausreichende Erstreckung in Richtung der Rotationsachse 4-4 aufweisen, so dass das Anschlagmittel an dem Felgenhorn 30 vorbeigeführt werden kann.

### BEZUGSZEICHENLISTE

- 1: Fahrzeug
- 2: Fahrzeugrad
- 3: Felge
- 4: Rotationsachse
- 5: Anschlagelement
- 6: Anschlagelement
- 7:
- 8:
- 9:
- 10: Felge
- 11: Felgenkörper
- 12: Zusatzkörper
- 13: Schweißkörper
- 14: Durchbrechungen
- 15: Anschlagelement
- 16: Aufnahmeelement
- 17: Öse
- 18: Anschlagkörper
- 19: Tragkörper
- 20: Schraube
- 21: Lagerhülse
- 22: Lager
- 23: Bohrung
- 24: Schwenkachse
- 25: rotatorischer Freiheitsgrad
- 26: Schwenk-Freiheitsgrad
- 27: Schenkel T horizontal
- 28: Schenkel T vertikal
- 29: Felgenschulter
- 30: Felgenhorn
- 31: Kreisringscheibe
- 32: Kreisringscheibe
- 33: Gewindebohrung
- 34: Längsachse
- 35: Befestigungsbohrung
- 36: Durchbrechung
- 37: Ventil
- 38: Anschlagmittel
- 39: Hubrahmen
- 40: Außengewinde

## Patentansprüche

1. Felge (10) mit einem Anschlagelement (15) zum Anschlagen eines Anschlagmittels (38), insbesondere eines Seiles oder einer Kette, welches zum Anheben eines mit der Felge (10) verbundenen Fahrzeuges (1) dient, **dadurch gekennzeichnet, dass** das Anschlagelement (15) fluchtend zur Rotationsachse (4-4) der Felge (10) befestigt ist, indem das Anschlagelement (15) mit einer Gewindebohrung oder Durchgangsbohrung (33) verschraubt ist, die fluchtend zur Rotationsachse (4-4) der Felge (10) orientiert ist.

2. Felge (10) nach Anspruch 1, **dadurch gekennzeichnet, dass** das Anschlagelement (15) mit einem Tragkörper (19) gebildet ist, von dem ein Endbereich ein Außengewinde (40) besitzt, über welches der Tragkörper (19) mit der Gewindebohrung oder Durchgangsbohrung (33) der Felge (10) verschraubbar ist.

3. Felge (10) nach einem der Ansprüche 1 bis 2, **dadurch gekennzeichnet, dass** ein Anschlagkörper (18) drehbar um die Rotationsachse (4-4) der Felge (10) gegenüber dem Tragkörper (19) oder einem Tragkörper des Anschlagelements (15) gelagert ist.

4. Felge (10) nach einem der Ansprüche 1 bis 3, **dadurch gekennzeichnet, dass** das Anschlagelement (15) ein Aufnahmeelement (16) besitzt, welches verschwenkbar um eine Schwenkachse (24), die quer zur Rotationsachse (4-4) der Felge (10) orientiert ist, gegenüber weiteren Bauelementen des Anschlagelements (15) gelagert ist.

5. Felge (10) nach Anspruch 4, **dadurch gekennzeichnet, dass** das Aufnahmeelement (16) mit einer Öse (17) ausgebildet ist.

6. Felge (10) nach einem der Ansprüche 3 bis 5, **dadurch gekennzeichnet, dass** eine Fixiereinrichtung vorgesehen ist, über welche der Freiheitsgrad (25) der Verdrehung des Anschlagkörpers (18) um die Rotationsachse (4-4) der Felge (10) und/oder der Freiheitsgrad (26) der Verschwenkung des Aufnahmeelementes (16) um die Schwenkachse (24) beseitigbar ist oder einschränkbar ist.

7. Felge (10) nach einem der vorhergehenden Ansprüche, **dadurch gekennzeichnet, dass** ein Zusatzkörper (12) an dem Felgenkörper (11) befestigt ist, an welchem das Anschlagelement (15) befestigbar ist.

8. Felge (10) nach Anspruch 7, **dadurch gekennzeichnet, dass** der Zusatzkörper (12) Durchbrechungen (14; 15) aufweist, die geeignet ausgebildet und angeordnet sind, dass durch diese Schrauben zugänglich sind, die einer Befestigung der Felge (10) an einem Fahrzeug (1) dienen.

9. Fahrzeug (1) mit mindestens einer Felge (15) nach einem der Ansprüche 1 bis 8.

## Claims

1. Rim (10) comprising a mounting element (15) for a mounting means (38), in particular a rope or a chain, used for lifting a vehicle connected to or linked with the rim (10), **characterized by** the mounting element (15) being mounted with or fixed at the rim (10) coaxial to an axis of rotation (4-4) by screwing the mounting element (15) with a threaded bore or through hole (33) having an orientation coaxial to the axis of rotation (4-4) of the rim (10).

2. Rim (10) according to claim 1 wherein the mounting element (15) comprises a supporting body (19) and one end region of the supporting body (19) comprises an outer thread (40) used for threading the supporting body (19) with the threaded bore or through hole (33) of the rim (10).

3. Rim (10) according to claim 1 or 2 wherein a mounting body (18) is rotatably supported by the supporting body (19) or the supporting body of the mounting element (15) with a rotational degree of freedom around the axis of rotation (4-4).

4. Rim (10) according to one of claims 1 to 3 wherein the mounting element (15) comprises a receiving element (16) which is pivotably supported with respect to other components of the mounting element (15) for a pivoting movement around a pivoting axis (24) having an orientation transverse to the axis of rotation (4-4) of the rim (10).

5. Rim (10) of claim 4 wherein the receiving element (16) is built with a ring, loop, link, lug or eye (17).

6. Rim (10) according to one of claims 3 to 5 wherein a fixing device is provided for removing or restricting the degree of freedom (25) of a rotation of the mounting body (18) around the axis of rotation (4-4) of the rim (10) and/or the degree of freedom (26) for a pivoting movement of the receiving element (16) around the pivoting axis (24).

7. Rim (10) according to one of the preceding claims wherein an additional body (12) is fixed at or assembled with the body (11) of the rim, wherein the mounting element (15) is fixable at the body (11) of the rim.

8. Rim (10) according to claim 7 wherein the additional body (12) comprises openings (14; 15) being designed and positioned such that screws for fixing the rim (10) at a vehicle (1) are accessible.

9. Vehicle (1) comprising at least one rim (15) according to claims 1 to 8.

## Revendications

1. Jante (10) comportant un élément d'accrochage (15) pour y accrocher un moyen d'accrochage (38), en particulier un câble ou une chaîne, qui est utilisé pour relever un véhicule (1) relié à la jante (10), **caractérisée en ce que** l'élément d'accrochage (15) est fixé en alignement avec l'axe de rotation (4-4) de la jante (10), du fait que l'élément d'accrochage (15) est vissé à une forure taraudée ou une forure de passage (33), qui est orientée en alignement avec l'axe de rotation (4-4) de la jante (10).

2. Jante (10) selon la revendication 1, **caractérisée en ce que** l'élément d'accrochage (15) est formé avec un corps de support (19), dont une zone d'extrémité possède un filetage extérieur (40), par lequel le corps de support (19) peut être vissé avec la forure taraudée ou forure de passage (33) de la jante (10).

3. Jante (10) selon l'une quelconque des revendications 1 à 2, **caractérisée en ce qu'**un corps d'accrochage (18) est monté de manière à pouvoir tourner autour de l'axe de rotation (4-4) de la jante (10), par rapport au corps de support (19) ou un corps de support de l'élément d'accrochage (15).

4. Jante (10) selon l'une quelconque des revendications 1 à 3, **caractérisée en ce que** l'élément d'accrochage (15) comporte un élément de réception (16), qui est monté de manière à pouvoir pivoter, par rapport à d'autres éléments de l'élément d'accrochage (15), autour d'un axe de pivotement (24), qui est orienté transversalement à l'axe de rotation (4-4) de la jante (10).

5. Jante (10) selon la revendication 4, **caractérisée en ce que** l'élément de réception (16) est réalisé avec un anneau (17).

6. Jante (10) selon l'une quelconque des revendications 3 à 5, **caractérisée en ce qu'**il est prévu un dispositif de fixation, par lequel le degré de liberté (25) de la rotation du corps d'accrochage (18) autour de l'axe de rotation (4-4) de la jante (10) et/ou le degré de liberté (26) du pivotement de l'élément de réception (16) autour de l'axe de pivotement (24) peuvent être supprimés ou limités.

7. Jante (10) selon l'une quelconque des revendications précédentes, **caractérisée en ce qu'**un corps supplémentaire (12), sur lequel peut être fixé l'élément d'accrochage (15), est fixé contre le corps de jante (11).

8. Jante (10) selon la revendication 7, **caractérisée en ce que** le corps supplémentaire (12) comporte des passages (14 ; 15), qui sont réalisés et agencés de telle sorte que des vis, destinées à fixer la jante (10) à un véhicule (1), sont accessibles à travers ceux-ci.

9. Véhicule (1) comportant au moins une jante (10) selon l'une quelconque des revendications 1 à 8.
